# EUROPEAN PATENT APPLICATION

(11) **EP 2 161 897 A1**
(43) Date of publication of application: **10.03.2010**
(21) Application number: 08290833.6
(22) Date of filing: 04.09.2008
(51) Int. Cl.: H04L 29/06

(54) **A method for IP address assignment for access to IP services via WiMAX or 3GPP access network**

(71) Applicant: Alcatel Lucent, 75008 Paris (FR)
(72) Inventor: El Mghazli, Yacine, 94110 Arcueil (FR); Chakri, Al Mahdi, 75015 Paris (FR)
(74) Representative: El Manouni, Josiane

(57) **Abstract**

One object of the present invention is a method for IP address assignment for access to IP services via WiMAX or 3GPP access network, said method comprising the steps of:
- providing, in a request for IP address assignment, a same identifier, referred to as a 3GPP/WiMAX identifier, enabling to uniquely identify a user in case of access via WiMAX access network or in case of access via 3GPP access network,
- assigning a common IP address in case of access via WiMAX access network or in case of access via 3GPP access network, based on said 3GPP/WiMAX identifier.

## Description

The present invention generally relates to mobile communication networks and systems.

Detailed descriptions of mobile communication networks and systems can be found in the literature, such as literature published by standardisation bodies.

One example is WiMAX, a description of which can be found in particular in IEEE 802.16e and WiMAX Forum standards.

In WiMAX, a Mobile Station MS has access, via an Access Service Network ASN, to IP services provided by a Connectivity Service Network CSN. ASN is defined as a set of network functions needed to provide radio access to a WiMAX subscriber. CSN is defined as a set of network functions enabling IP connectivity and WiMAX services to WiMAX subscribers. ASN includes entities such as Base Station BS and ASN Gateway ASN GW. CSN includes entities such as AAA Server, DHCP Server and Home Agent HA. Different interoperability Reference Points are defined, such as in particular Reference Point R3 between ASN and CSN.

In WiMAX, management of IP address delivered to a Mobile Station MS comprises:
- Home Address HoA assignment, and Mobile IP (MIP) registration, performed at WiMAX entry,
- MIP registration updating, performed at R3 handover.

HoA assignment performed at WiMAX entry can be based on DHCP, in particular for Proxy-MIP based access. DHCP is specified in particular in RFC 2131 published by IETF.

Another example is 3GPP ("3^{rd} Generation Partnership Project"), a description of which can be found in particular in 3GPP standards.

In 3GPP, a Mobile Station MS (or User Equipment UE) has access to IP services via an Access Network AN providing IP connectivity. The Access Network AN generally comprises a Radio Access Network RAN and a Packet Switched Core Network PS CN. The Packet Core Network includes entities such as SGSN (Serving GPRS Support Node), GGSN (Gateway GPRS Support Node), and HLR/HSS (Home Location Register/Home Subscriber Server). Different interfaces are defined, such as in particular Gi interface between GGSN and external Packet Data Network PDN. The external PDN is selected based on the requested APN (Access Point Name), provided by the user at PDP Context Activation procedure.

In 3GPP, an IP address can be assigned to a Mobile Station at PDP Context activation. The Packet Core Network can offer either transparent or non transparent access. In case of non transparent access to ISP (Internet service Provider), an IP address can be assigned using DHCP signalling between GGSN and DHCP Server associated with the ISP. Interworking between Packet Core Network and external PDN is specified in particular in 3GPP TS 29.061.

Generally, there is a need to improve interworking and/or mobility between different types of access networks, such as in particular WiMAX and 3GPP access networks. In particular, it is important that the Mobile Stations can communicate using a same IP address regardless of the access network, in particular to ensure session continuity and seemless handovers between such access networks.

The present invention in particular addresses such needs.

These and other objects of the present invention are achieved, in one aspect of the present invention, by a method for IP address assignment for access to IP services via WiMAX or 3GPP access network, said method comprising the steps of:
- providing, in a request for IP address assignment, a same identifier, , referred to as a 3GPP/WiMAX identifier, enabling to uniquely identify a user in in case of access via WiMAX access network or in case of access via 3GPP access network.
- assigning a common IP address in case of access via WiMAX access network or in case of access via 3GPP access network, based on said identifier.

These and other objects of the present invention are achieved, in another aspect of the present invention, by entities, such as in particular Mobile Station MS, 3GPP Packet Core Network entity such as in particular GGSN, and 3GPP/WiMAX interworking node, comprising means for performing such method.

These and other objects of the present invention will become more apparent from the following description taken in conjunction with the accompanying drawings:
- figure 1 illustrates an example of architecture using the present invention,
- figure 2 illustrates a first example of IP address assignment during WiMAX network entry, using the present invention,
- figure 3 illustrates a second example of IP address assignment during WiMAX network entry, using the present invention,
- figure 4 illustrates an example of IP address assignment during 3GPP network entry, using the present invention,
- figure 5 illustrates a first example of IP address assignment during 3GPP to WiMAX handover, using the present invention,
- figure 6 illustrates a second example of IP address assignment during 3GPP to WiMAX handover, using the present invention,
- figure 7 illustrates an example of IP address assignment during WiMAX to 3GPP handover, using the present invention.

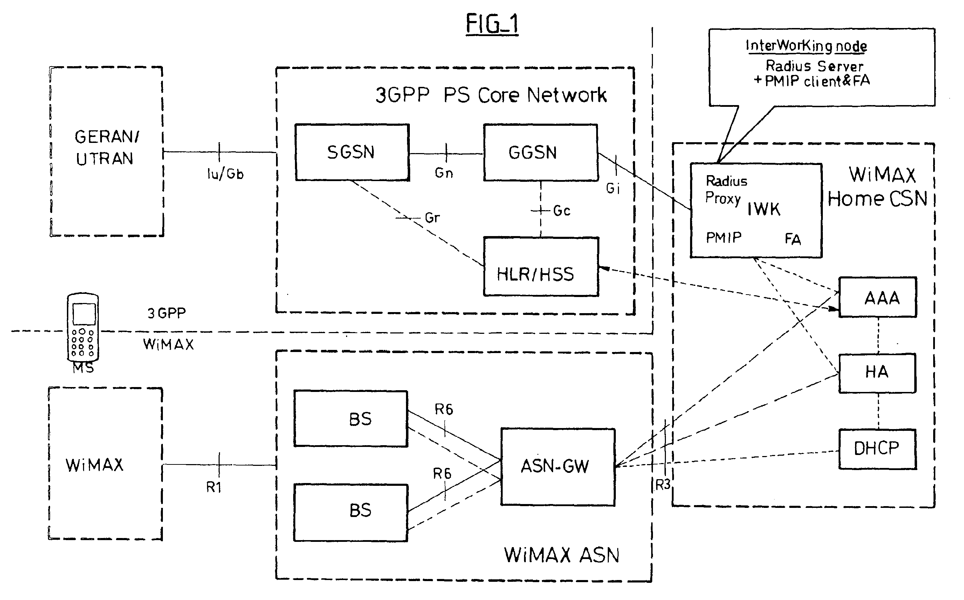

The system illustrated in figure 1 comprises:
- a dual-mode WiMAX /3GPP Mobile Station MS,
- a WiMAX network comprising ASN and Home CSN, ASN in turn comprising entities such as BS and ASN-GW, and Home CSN in turn comprising entities such as AAA Server, Home Agent HA and DHCP Server,
- a 3GPP access network comprising RAN (such as GERAN/UTRAN) and PS Core Network, such as 2G/3G PS Core Network, in turn comprising entities such as SGSN, GGSN and HLR/HSS,
- a 3GPP/WiMAX interworking node (noted IWK ) associated with a specific APN such that, at 3GPP network entry or at handover from WiMAX to 3GPP, a Mobile Station MS sends an Activate PDP Context with this specific APN for access to this 3GPP/WiMAX interworking node. In other words, with this interworking node, the WiMAX Home CSN is considered by GGSN as an ISP identified by a dedicated APN.

In an embodiment, the present invention provides a method for IP address assignment for access to IP services via WiMAX or 3GPP access network, said method comprising the steps of:
- providing, in a request for IP address assignment, a same identifier, , referred to as a 3GPP/WiMAX identifier, enabling to uniquely identify a user in case of access via WiMAX access network or in case of access via 3GPP access network,
- assigning a common IP address in case of access via WiMAX access network or in case of access via 3GPP access network, based on said identifier.

In an example, which will more particularly be considered in the following description, said 3GPP/WiMAX identifier corresponds to NAI (Network Access Identifier). NAI is defined in particular in RFC 4282 published by IETF. It should be understood that other examples of identifiers could be considered.

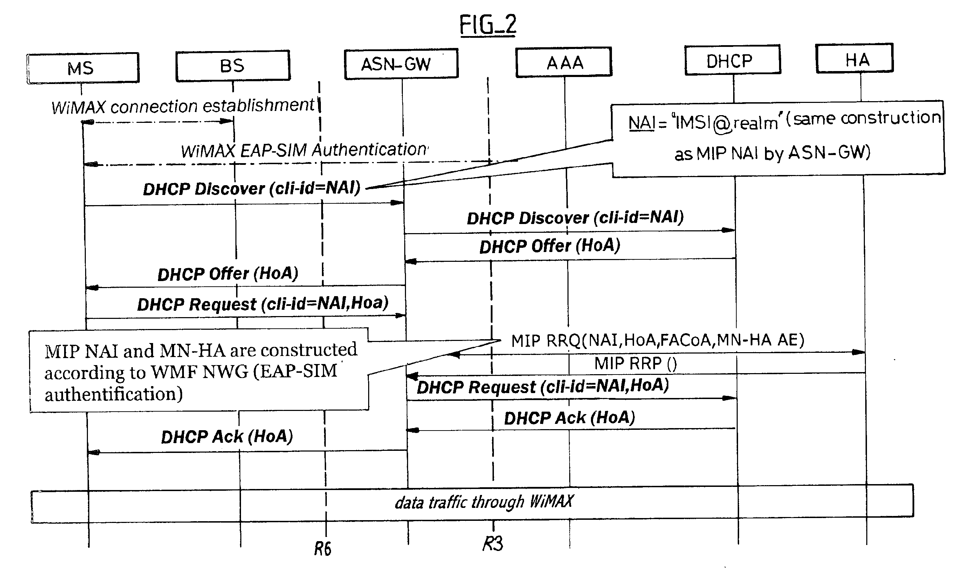

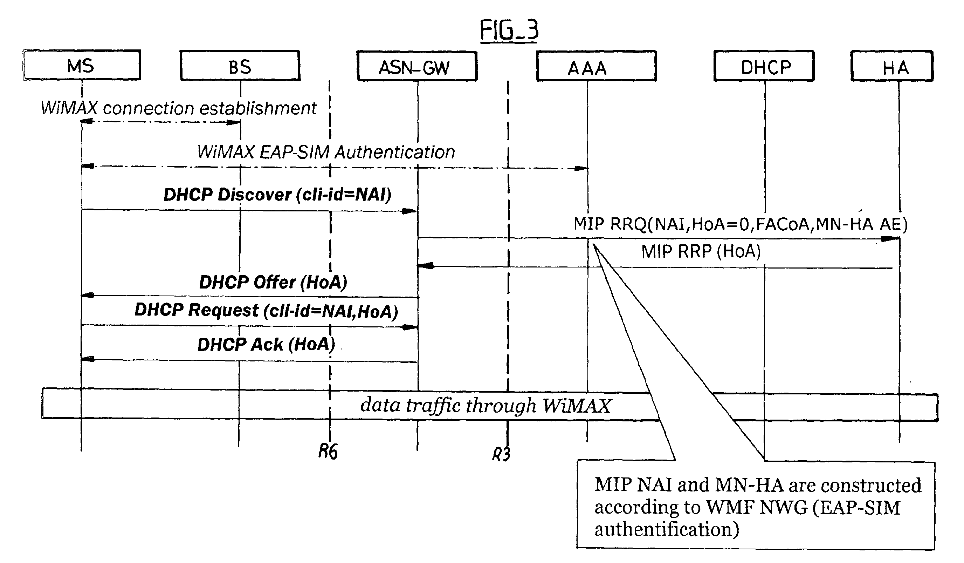

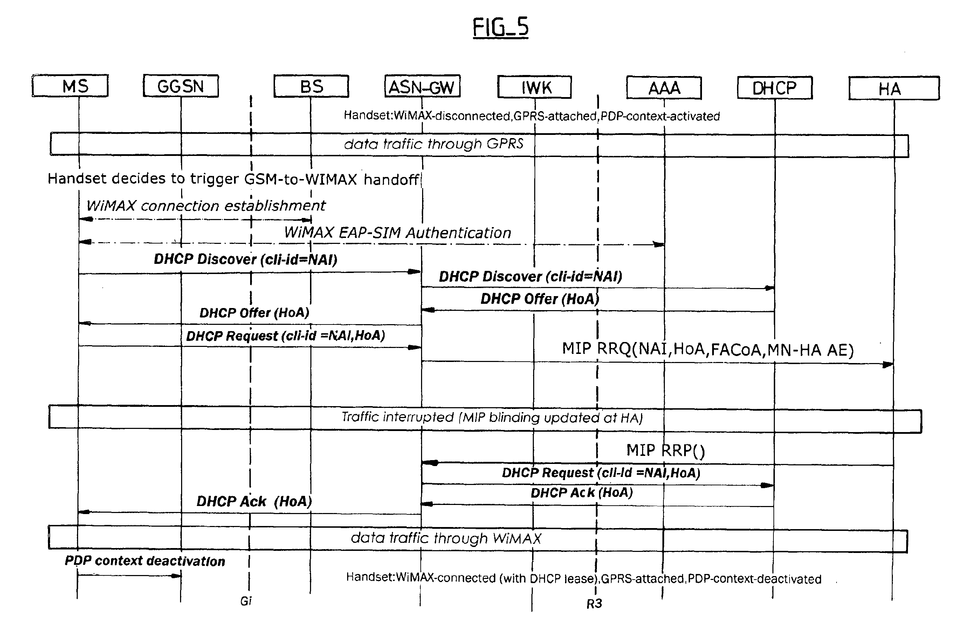

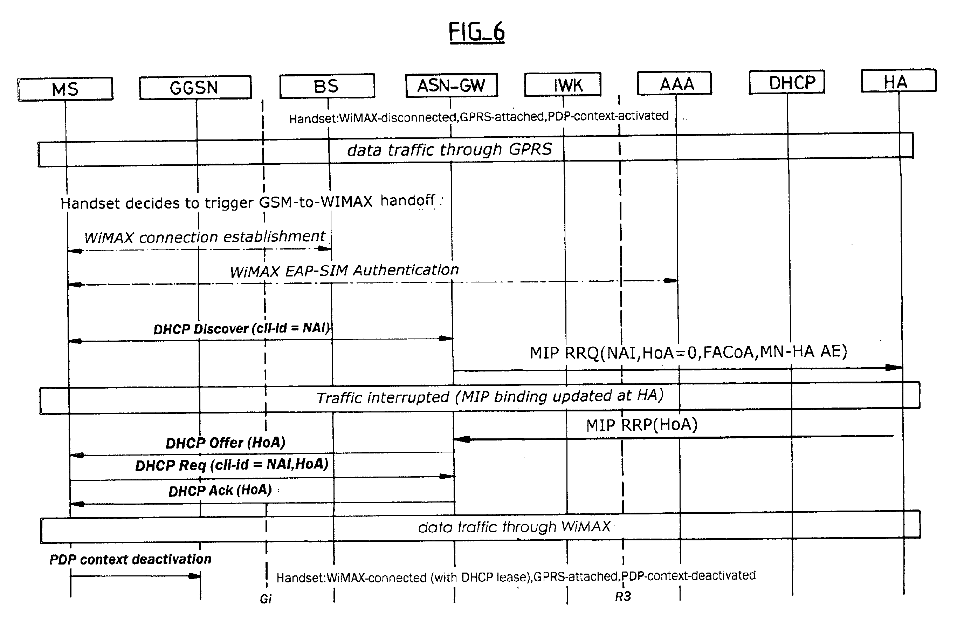

In a system such as for example the one illustrated in figure 1, examples of IP address assignment for access to IP services via WiMAX or 3GPP access network during different procedures will be described in relation with figures 2 to 7. These different procedures include WiMAX network entry, GSM/GPRS network entry, handover from GSM/GPRS to WiMAX, handover from WiMAX to GSM/GPRS. In these figures, a message containing certain information or parameters is illustrated by the name of this message followed by these information or parameters in parentheses. Figures 2 and 3 illustrate examples of WiMAX network entry procedure. Figures 5 and 6 illustrate examples of GSM/GPRS to WiMAX handover procedure. In the illustrated exaples examples MS dual-mode terminals that support such 3GPP/WiMAX interworking adds a Client-identifier field to the DHCP messages set to NAl=IMSI@realm, associated to a given HoA. In DHCP relay mode, this will ensure that the DHCP allocates the same HoA when coming from GPRS. The ASN-GW remains unchanged and has a unique behavior for both WiMAX-only and dual-mode terminals: it simply relays the DHCP messages. It is transparent when DHCP proxy mode.

Figure 2 illustrates a first example of WiMAX network entry procedure, this first example corresponding to DHCP relay mode. The following steps are provided:
- WiMAX connection establishment is performed.
- WiMAX EAP-SIP Authentication is performed.
- A message DHCP Discover (cli-id= NAI) is sent by the MS. NAI = "IMSI@realm" same construction as MIP NAI by ASN-GW).
- A message DHCP Discover (cli-id= NAI) is sent by the serving ASN-GW acting as a DHCP relay, to the DHCP Server.
- A message DHCP Offer (HoA) is sent by the DHCP Server to the serving ASN-GW.
- A message DHCP Offer (HoA) is sent by the serving ASN-GW to the MS.
- A message DHCP Request (cl-id=NAI, HoA) is sent by MS to the serving ASN-GW.
- A MIP Regitration Request MIP RRQ (HoA, FACoA, MN-HA AE) is sent by the Serving ASN-GW to the HA. MIP NAI and MN-HA AE are constructed according to WiMAX Forum NWG standard (EAP-SIM authentication).
- A MIP Regitration Response MIP RRP (HoA) is sent by the HA to the Serving ASN-GW.
- A message DHCP Request (cl-id=NAI, HoA) is sent by the serving ASN-GW to the DHCP Server.
- A message DHCP Ack HoA) is sent by the DHCP Server to the serving ASN-GW.
- A message DHCP Ack (HoA) is sent by the serving ASN-GW to the MS.
- Data traffic can be exchanged from/to the MS through the WiMAX network.

Figure 3 illustrates a second example of WiMAX network entry procedure, this second example corresponding to DHCP proxy mode. The following steps are provided:
- WiMAX connection establishment is performed.
- WiMAX EAP-SIP Authentication is performed.
- A message DHCP Discover (cli-id= NAI) is sent by the MS.
- A MIP Regitration Request MIP RRQ (NAI, HoA=0, FACoA, MN-HA AE) is sent by the Serving ASN-GW to the HA.
- A MIP Regitration Response MIP RRP (HoA) is sent by the HA to the Serving ASN-GW.
- A message DHCP Offer (HoA) is sent by the serving ASN-GW to the MS.
- A message DHCP Request (cl-id=NAI, HoA) is sent by MS to the serving ASN-GW.
- A message DHCP Ack (HoA) is sent by the serving ASN-GW to the MS.

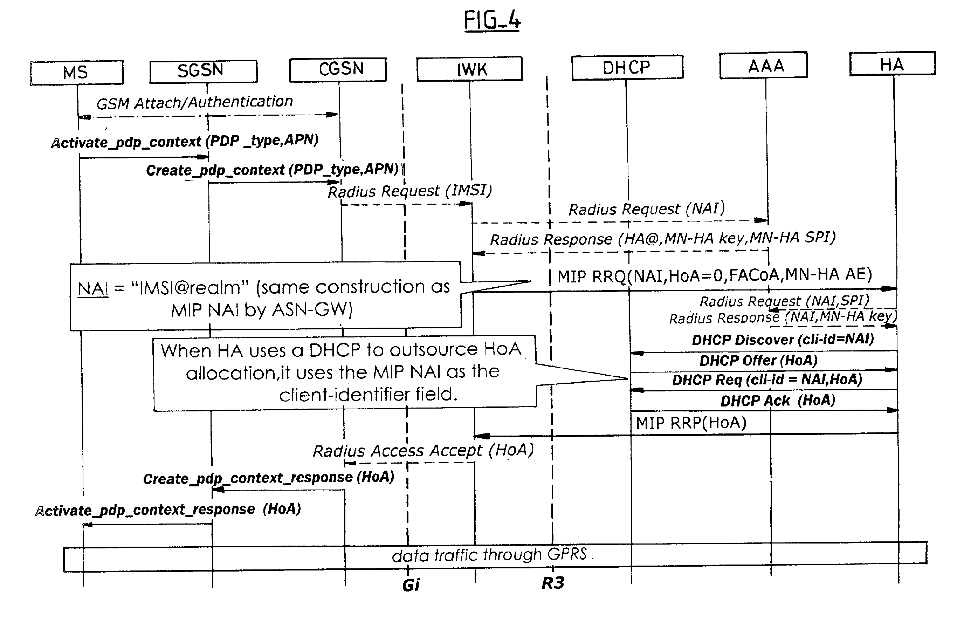

Figure 4 illustrates an example of GSM/GPRS network entry procedure. The following steps are provided:
- GSM Attach/Authentication is performed.
- A message Activate_PDP_Context (PDP type, APN) is sent by the MS to the SGSN. A dedicated APN for 3GPP/WiMAX interworking, associated with IWK is used, and transparent access mode is used.
- A message Create_PDP_Context (PDP type, APN) is sent by the SGSN to the GGSN.
- GGSN sends a Radius Accept Request (IMSI) to IWK.
- IWK sends a Radius Accept Request (NAI) to AAA Server,
- AAA Server sends a Radius Accept response (HA@, MN-HA key, MN-HA SPI) to IWK,
- A MIP Regitration Request MIP RRQ (NAI, HoA=0, FACoA, MN-HA AE) is sent by IWK to the HA. NAI = "IMSI@realm" (same construction as MIP NAI by ASN-GW).
- HA sends Radius Request (NAI, SPI) to AAA Server (when HA uses a DHCP to outsource HoA allocation, it uses the MIP NAI as the client-identifier field).
- AAA Server sends Radius Response (NAI, MN-HA key) to HA,
- A message DHCP Discover (cl-id= NAI) is sent by HA to the DHCP Server.
- A message DHCP Offer (HoA) is sent by the DHCP Server to HA.
- A message DHCP Request (cl-id=NAI, HoA) is sent by HA to the DHCP Server.
- A message DHCP Ack (HoA) is sent by the DHCP Server to HA.
- A MIP Regitration Response MIP RRP (HoA) is sent by the HA to IWK.
- IWK sends a Radius Access Accept (HoA) to the GGSN.
- A message Create_PDP_Context_response (HoA) is sent by GGSN to SGSN.
- A message Activate_PDP_Context_Response (HoA) is sent by the SGSN to the MS.
- Data traffic can be exchanged from/to the MS through the 3GPP GPRS network.

Figure 5 illustrates a first example of GSM/GPRS to WiMAX handover procedure, this first example corresponding to DHCP relay mode. The following steps are provided:
- Data traffic is exchanged from/to the MS through the 3GPP GPRS network.
- The MS decides to trigger GSM to WiMAX handover.
- WiMAX connection establishment is performed.
- WiMAX EAP-SIM authentication is performed.
- A message DHCP Discover (cli-id = NAI) is sent by MS.
- A message DHCP Discover (cli-id = NAI) is sent by Serving ASN-GW acting as DHCP relay to DHCP Server.
- A message DHCP Offer (HoA) is sent by DHCP Server to Serving ASN-GW.
- A message DHCP Offer (HoA) is sent by Serving ASN-GW to MS.
- A message DHCP request (cl-id=NAI, HoA) is sent by MS to Serving ASN-GW.
- A MIP Regitration Request MIP RRQ (NAI, HoA, FACoA, MN-HA AE) is sent by the Serving ASN-GW to the HA.
- Traffic is interrupted (MIP binding updated at HA)
- A MIP Regitration Response MIP RRP (HoA) is sent by the HA to the Serving ASN-GW.
- A message DHCP request (cl-id=NAI, HoA) is sent by Serving ASN-GW to DHCP Server.
- A message DHCP Ack (HoA) is sent by DHCP Server to Serving ASN-GW.
- A message DHCP Ack (HoA) is sent by the serving ASN-GW to the MS.
- Data traffic can be exchanged from/to the MS through the WiMAX network.
- PDP context deactivation is performed.

Figure 6 illustrates a second example of GSM/GPRS to WiMAX handover procedure, this second example corresponding to DHCP proxy mode. The following steps are provided:
- Data traffic is exchanged from/to the MS through the 3GPP GPRS network.
- The MS decides to trigger GSM to WiMAX handover.
- WiMAX connection establishment is performed.
- WiMAX EAP-SIM authentication is performed.
- A message DHCP Discover (cli-id = NAI) is sent by MS.
- A MIP Regitration Request MIP RRQ (NAI, HoA=0, FACoA, MN-HA AE) is sent by the Serving ASN-GW to the HA.
- Traffic is interrupted (MIP binding updated at HA)
- A MIP Regitration Response MIP RRP (HoA) is sent by the HA to the Serving ASN-GW.
- A message DHCP Offer (HoA) is sent by Serving ASN-GW to MS.
- A message DHCP request (cl-id=NAI, HoA) is sent by MS to Serving ASN-GW.
- A message DHCP Ack (HoA) is sent by the serving ASN-GW to the MS.
- Data traffic can be exchanged from/to the MS through the WiMAX network.
- PDP context deactivation is performed.

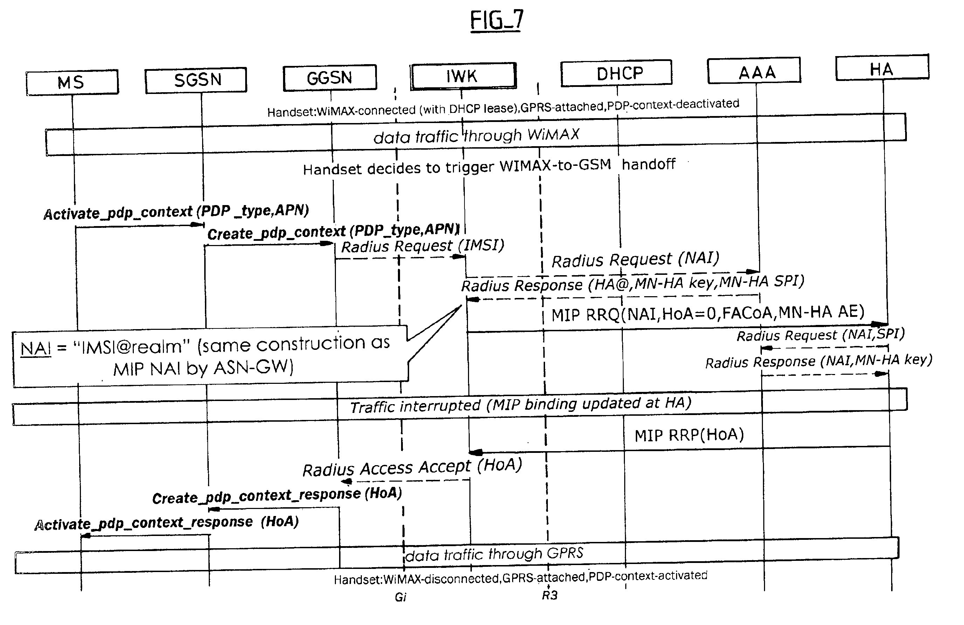

Figure 7 illustrates an example of WiMAX to GSM/GPRS handover procedure. The following steps are provided:
- Data traffic is exchanged from/to the MS through the WiMAX network.
- The MS decides to trigger WiMAX to GSM handover.
- A message Activate_PDP_Context (PDP type, APN) is sent by MS to SGSN.
- A message Create_PDP_Context (PDP type, APN) is sent by SGSN to GGSN.
- A message RADIUS request (IMSI) is sent by GGSN to IWK.
- IWK sends Radius Request (NAI) to AAA Server.
   NAI = "IMSI@realm" (same construction as MIP NAI by ASN-GW)
- AAA Server sends Radius Response (HA@, MN-HA key, MN-HA SPI) to IWK.
- A MIP Regitration Request MIP RRQ (NAI, HoA=0, FACoA, MN-HA AE) is sent by IWK to the HA.
- HA sends Radius Request (NAI, SPI) to AAA Server.
- AAA Server sends Radius Response (NAI, MN-HA key) to HA.
- Traffic is interrupted (MIP binding updated at HA)
- A MIP Regitration Response MIP RRP (HoA) is sent by the HA to IWK.
- A message RADIUS Access Accept (HoA) is sent by IWK to the GGSN.
- A message Create_PDP_Context_response (HoA) is sent by GGSN to SGSN.
- A message Activate_PDP_Context_Response (HoA) is sent by the SGSN to the MS.
- Data traffic can be exchanged from/to the MS through the 3GPP GPRS network.

An advantage of such solution is that the terminal IP address can be preserved when handing over from one access network to another access network in order to ensure data session continuity.

Another advantage is that this allows data session continuity during handover from one access network to another access network with very minor impacts on these two networks, there is no need to change the architecture or the functionalities of these two networks to achieve this goal. In addition, it uses RADIUS messages interaction between the GGSN and the 3GPP/WiMAX interworking node, and RADIUS is fully supported natively in GGSNs.

In one aspect of the present invention, in an embodiment, there is provided a method for IP address assignment for access to IP services via WiMAX or 3GPP access network, said method comprising the steps of:
- providing, in a request for IP address assignment, a same identifier, referred to as a 3GPP/WiMAX identifier, enabling to uniquely identify a user in case of access via WiMAX access network or in case of access via 3GPP access network,
- assigning a common IP address in case of access via WiMAX access network or in case of access via 3GPP access network, based on said 3GPP/WiMAX identifier.

In an example, said 3GPP/WiMAX identifier corresponds to Network Access Identifier NAI.

In an example NAI corresponds to IMSI @realm.

In another example, NAI corresponds to MSISDN @realm.

In another aspect of the present invention, in an embodiment, there is provided a method comprising the steps of, in case of access via 3GPP access network:
- upon activation of a PDP Context using non transparent access mode and an APN associated with a 3GPP/WiMAX interworking node IWK , a GGSN in said 3GPP access network providing to IWK an identifier, referred to as 3GPP identifier, enabling to uniquely identify the user in said 3GPP access network,
- IWK constructing said 3GPP/WiMAX identifier, from said 3GPP identifier provided at said PDP context activation,
- IWK providing said 3GPP/WiMAX identifier in a request for IP address assignment sent to an IP address Server in WiMAX CSN.

In an example, said 3GPP identifier corresponds to International Mobile Subscriber Identity IMSI.

In another example, said 3GPP identifier corresponds to Mobile Subscriber ISDN Number MSISDN.

In an embodiment, said method comprises a step of:
- IWK constructing NAI by adding realm information to IMSI.

In another embodiment, said method comprises a step of:
- IWK constructing NAI by adding realm information to MSISDN.

In another embodiment, said method comprises the steps of:
- GGSN sending to IWK a RADIUS request containing said 3GPP identifier,
- IWK sending to GGSN a RADIUS response containing an IP address assigned based on said 3GPP/WiMAX identifier.

In another embodiment, said method comprises the steps of, in the case of a 3GPP/WiMAX identifier corresponding to NAI :
- IWK, using MIP NAI extension, sending to a Home Agent HA in the WiMAX Home CSN, a MIP Registration Request containing NAI.

In another embodiment, said method comprises the steps of, in case of 3GPP entry:
- HA providing NAI in the Client Identifier Option of a DHCP Discover message,
- a DHCP Server in the WiMAX Home CSN assigning an IP Home Address HoA, based on NAI, and sending to HA a DHCP message containing said IP Home Address HoA,
- HA sending to IWK a MIP Registration Response containing an assigned IP Home Address HoA.

In another embodiment, said method comprises a step of, in case of WiMAX to 3GPP handover:
- HA assigning a Home Address HoA, based on NAI, and sending to IWK a MIP Registration Response containing said Home Address HoA.

In another aspect of the present invention, in an embodiment, said method comprises the steps of:
- prior to sending said MIP Registration Request, IWK sending to an AAA Server in WiMAX Home CSN a RADIUS Request containing NAI,
- AAA Server returning to IWK a Radius Response including necessary information for IWK to update the MIP binding (such information including, in an embodiment, HA IP address HA@, MN-HA key, MN-HA SPI).

In another aspect of the present invention, in an embodiment, there is provided a method comprising a step of, in case of access via WiMAX access network:
- a Mobile Station MS providing said 3GPP/WiMAX identifier in the Client Identifier Option of DHCP messages sent to the WiMAX access network.

In another embodiment, said method comprises the steps of, in a DHCP Relay mode:
- a serving ASN-GW in the WiMAX access network relaying to a DHCP Server in the WiMAX Home CSN DHCP messages sent by said Mobile Station ,
- said DHCP Server assigning an IP address based on said 3GPP/WiMAX identifier,
- the Mobile Station receiving the assigned IP address in DHCP messages relayed by the serving ASN-GW,
- the Serving ASN-GW sending to a Home Agent HA in the WiMAX Home CSN a MIP Registration Request containing said 3GPP/WiMAX identifier and the assigned IP address HoA.

In another embodiment, said method comprises the steps of, in a DHCP Proxy mode:
- upon reception of DHCP Discover message sent by the Mobile Station, a serving ASN-GW in the WiMAX access network, using MIP NAI extension, sending to a Home Agent HA in the WiMAX Home CSN a MIP Registration Request containing NAI,
- HA sending to the serving ASN-GW a MIP Registration Response containing an assigned IP Home Address HoA,
- the serving ASN-GW sending the assigned IP Home Address HoA to the Mobile Station in DHCP messages.

In addition to a method for IP address assignment for access to IP services via WiMAX or 3GPP access network (examples of which have been decribed above), the present invention also has for its object different entities, such as in particular Mobile Station MS, 3GPP Packet Core Network entity such as in particular GGSN, 3GPP/WiMAX interworking node, Home Agent, DHCP Server, AAA Server, comprising means for performing such methods.

The detailed implementation of the above-mentioned means does not raise any special problem for a person skilled in the art, and therefore such means do not need to be more fully disclosed than has been made above, by their function, for a person skilled in the art.

## Claims

1. A method for IP address assignment for access to IP services via WiMAX or 3GPP access network, said method comprising the steps of:
- providing, in a request for IP address assignment, a same identifier, referred to as a 3GPP/WiMAX identifier, enabling to uniquely identify a user in case of access via WiMAX access network or in case of access via 3GPP access network,
- assigning a common IP address in case of access via WiMAX access network or in case of access via 3GPP access network, based on said 3GPP/WiMAX identifier.

2. A method according to claim 1, wherein said 3GPP/WiMAX identifier corresponds to Network Access Identifier NAI.

3. A method according to claim 2, wherein NAI corresponds to IMSI @realm.

4. A method according to claim 2, wherein NAI corresponds to MSISDN @realm.

5. A method according to any of claims 1 to 4, comprising the steps of, in case of access via 3GPP access network:
- upon activation of a PDP Context using non transparent access mode and an APN associated with a 3GPP/WiMAX interworking node IWK, a GGSN in said 3GPP access network providing to IWK an identifier, referred to as 3GPP identifier, enabling to uniquely identify the user in said 3GPP access network,
- IWK constructing said 3GPP/WiMAX identifier, from said 3GPP identifier provided at said PDP context activation,
- IWK providing said 3GPP/WiMAX identifier in a request for IP address assignment sent to an IP address Server in WiMAX CSN.

6. A method according to claim 5, wherein said 3GPP identifier corresponds to International Mobile Subscriber Identity IMSI.

7. A method according to claim 5, wherein said 3GPP identifier corresponds to Mobile Subscriber ISDN Number MSISDN.

8. A method according to claims 5 and 6, comprising a step of:
- IWK constructing NAI by adding realm information to IMSI.

9. A method according to claims 5 and 7, comprising a step of:
- IWK constructing NAI by adding realm information to MSISDN.

10. A method according to any of claims 5 to 9, comprising the steps of:
- GGSN sending to IWK a RADIUS request containing said 3GPP identifier,
- IWK sending to GGSN a RADIUS response containing an IP address assigned based on said 3GPP/WiMAX identifier.

11. A method according to any of claims 1 to 10, comprising the steps of, in the case of a 3GPP/WiMAX identifier corresponding to NAI :
- IWK, using MIP NAI extension, sending to a Home Agent HA in the WiMAX Home CSN, a MIP Registration Request containing NAI.

12. A method according to claim 11, comprising the steps of, in case of 3GPP entry:
- HA providing NAI in the Client Identifier Option of a DHCP Discover message,
- a DHCP Server in the WiMAX Home CSN assigning an IP Home Address HoA, based on NAI, and sending to HA a DHCP message containing said IP Home Address HoA,
- HA sending to IWK a MIP Registration Response containing an assigned IP Home Address HoA.

13. A method according to claim 11, comprising a step of, in case of WiMAX to 3GPP handover:
- HA assigning a Home Address HoA, based on NAI, and sending to IWK a MIP Registration Response containing said Home Address HoA.

14. A method according to any of claims 1 to 13, comprising the steps of:
- prior to sending said MIP Registration Request, IWK sending to an AAA Server in WiMAX Home CSN a RADIUS Request containing NAI,
- AAA Server returning to IWK a Radius Response including necessary information for IWK to update the MIP binding.

15. A method according to any of claims 1 to 4, comprising a step of, in case of access via WiMAX access network:
- a Mobile Station MS providing said 3GPP/WiMAX identifier in the Client Identifier Option of DHCP messages sent to the WiMAX access network.

16. A method according to claim 15, comprising the steps of, in a DHCP Relay mode:
- a serving ASN-GW in the WiMAX access network relaying to a DHCP Server in the WiMAX Home CSN DHCP messages sent by said Mobile Station ,
- said DHCP Server assigning an IP address based on said 3GPP/WiMAX identifier,
- the Mobile Station receiving the assigned IP address in DHCP messages relayed by the serving ASN-GW,
- the Serving ASN-GW sending to a Home Agent HA in the WiMAX Home CSN a MIP Registration Request containing said 3GPP/WiMAX identifier and the assigned IP address HoA.

17. A method according to claim 15, comprising the steps of, in a DHCP Proxy mode:
- upon reception of DHCP Discover message sent by the Mobile Station, a serving ASN-GW in the WiMAX access network, using MIP NAI extension, sending to a Home Agent HA in the WiMAX Home CSN a MIP Registration Request containing NAI,
- HA sending to the serving ASN-GW a MIP Registration Response containing an assigned IP Home Address HoA,
- the serving ASN-GW sending the assigned IP Home Address HoA to the Mobile Station in DHCP messages.

18. A Mobile Station comprising means for performing a method according to claim 15.

19. A 3GPP Packet Core Network entity, in particular GGSN, comprising means for performing a method according to any of claims 5 to 10.

20. A 3GPP/WiMAX interworking node IWK, comprising means for performing a method according to any of claims 5 to 14.

21. A Home Agent, comprising means for performing a method according to any of claims 11 to 13, or 16 or 17.

22. A DHCP Server, comprising means for performing a method according to any of claims 12 or 16.

23. An AAA Server, comprising means for performing a method according to claim 14.
